Europäisches Patentamt

European Patent Office

Office européen des brevets

(19)

(11) EP 0 706 538 B1

(12) **EUROPÄISCHE PATENTSCHRIFT**

(45) Veröffentlichungstag und Bekanntmachung des Hinweises auf die Patenterteilung:
**10.03.1999 Patentblatt 1999/10**

(21) Anmeldenummer: **94920959.7**

(22) Anmeldetag: **20.06.1994**

(51) Int Cl.[6]: **C08G 69/16**, C08G 69/04

(86) Internationale Anmeldenummer:
**PCT/EP94/01998**

(87) Internationale Veröffentlichungsnummer:
**WO 95/01389 (12.01.1995 Gazette 1995/03)**

(54) **VERFAHREN ZUM KONTINUIERLICHEN HERSTELLEN VON NIEDERMOLEKULAREN POLYAMIDEN**

PROCESS FOR THE CONTINUOUS PRODUCTION OF LOW MOLECULAR POLYAMIDES

PROCEDE DE PRODUCTION CONTINUE DE POLYAMIDES DE FAIBLE POIDS MOLECULAIRE

(84) Benannte Vertragsstaaten:
**AT BE CH DE ES FR GB IT LI NL**

(30) Priorität: **30.06.1993 DE 4321683**

(43) Veröffentlichungstag der Anmeldung:
**17.04.1996 Patentblatt 1996/16**

(73) Patentinhaber: **BASF AKTIENGESELLSCHAFT
67056 Ludwigshafen (DE)**

(72) Erfinder:
- **PIPPER, Gunter
  D-67098 Bad Duerkheim (DE)**
- **KLEINKE, Andreas
  D-67063 Ludwigshafen (DE)**
- **HILDENBRAND, Peter
  D-76199 Karlsruhe (DE)**

(56) Entgegenhaltungen:
**EP-A- 0 530 592          DD-A- 113 681
FR-A- 2 284 627**

**Beschreibung**

Die vorliegende Erfindung betrifft ein verbessertes Verfahren zum kontinuierlichen Herstellen von Polyamiden aus einem Gemisch aus mindestens einem Lactam und Wasser sowie gewünschtenfalls weiterer Monomereinheiten und/oder üblichen Zusatz- und Füllstoffen unter polyamidbildenden Bedingungen, wobei man das Gemisch der Ausgangsstoffe in einer ersten Reaktionszone in flüssiger Phase erhitzt bis ein Umsatz von mindestens 70 % erreicht ist, und in einer weiteren Reaktionszone adiabatisch entspannt und weiterpolymerisiert.

Des weiteren betrifft die Erfindung niedermolekulares Polycaprolactam mit einem Molekulargewicht im Bereich von 3000 bis 14000 g/mol, die Verwendung dieses Polycaprolactams zur Herstellung von stückigem Polycaprolactam und hochmolekularem Polycaprolactam sowie ein Verfahren zur Herstellung von hochmolekularem Polycaprolactam aus diesem niedermolekularen Polycaprolactam.

In der DE-A 24 43 566 wird ein Verfahren zum kontinuierlichen Herstellen von Polyamiden durch fortlaufendes Bewegen eines Gemisches aus einem oder mehreren Lactamen und 1 bis 15 Gew.-% Wasser sowie gegebenenfalls anderen polyamidbildenden Verbindungen beschrieben, bei dem man das Gemisch der Ausgangsstoffe in einer ersten Reaktionszone auf Temperaturen von 210 bis 330°C erhitzt, in einer weiteren Reaktionszone das Polykondensationsgemisch adiabatisch entspannt und anschließend in weiteren Reaktionsstufen zu hochmolekularen Polyamiden auspolymerisiert, wobei man

a) das Gemisch der Ausgangsstoffe in der ersten Reaktionszone bei Drücken, die über den entsprechenden Dampfdrücken der Ausgangsstoffe liegen und die Bildung einer Dampfphase verhindern, 5 Minuten bis 2 Stunden, vorzugsweise 10 Minuten bis 1 Stunde, erhitzt, bis ein Umsatz von mindestens 70 % und vorzugsweise 80 % erreicht ist;

b) das Polykondensationsgemisch in der zweiten Zone auf Drücke von 1 bis 11 bar, vorzugsweise 1 bis 6 bar, entspannt und unmittelbar anschließend in einer dritten Reaktionszone, vorzugsweise zusammen mit dem bei der Entspannung gebildeten Wasserdampf unter Zufuhr von Wärme und Verdampfen der Hauptmenge des Wassers beim Entspannungsdruck oder einem niedrigeren Druck innerhalb von weniger als 10 Minuten, vorzugsweise weniger als 5 Minuten, auf Temperaturen von 250 bis 350°C, vorzugsweise 260 bis 280°C, erhitzt und

c) das Polymerisationsgemisch in einer vierten Reaktionszone vom Wasserdampf abtrennt und in weiteren Reaktionsstufen zu hochmolekularen Polyamiden auspolymerisiert.

Nachteilig an diesem Verfahren ist jedoch, daß die Schmelzviskosität des so hergestellten Polycaprolactams zu hoch ist. So führt eine hohe Schmelzviskosität in der Regel zu Problemen bei der Förderung der Schmelze und bei der Abführung von Reaktionswärme. Aufgrund dieser Probleme entstehen in der Regel Anbackungen innerhalb des Reaktorsystems, was unter anderem zu Qualitätsminderungen führt. Des weiteren ist die Raum-Zeit-Ausbeute des Verfahrens nach der DE-A 24 43 566 zu niedrig. Ferner ist niedermolekulares Polycaprolactam mit einem Umsatz von größer als 85 % nach der DE-A 24 43 566 nicht zugänglich.

Der vorliegenden Erfindung lag daher die Aufgabe zugrunde ein verbessertes Verfahren zur Herstellung von Polyamiden zur Verfügung zu stellen, das diese Nachteile nicht aufweist.

Demgemäß wurde ein Verfahren zum kontinuierlichen Herstellen von Polyamiden aus einem Gemisch aus mindestens einem Lactam und Wasser sowie gewünschtenfalls weiterer Monomereinheiten und/oder üblichen Zusatz- und Füllstoffen unter polyamidbildenden Bedingungen gefunden, wobei man das Gemisch der Ausgangsstoffe in einer ersten Reaktionszone in flüssiger Phase erhitzt bis ein Umsatz von mindestens 70 % erreicht ist, und in einer weiteren Reaktionszone adiabatisch entspannt und weiterpolymerisiert, indem man in der ersten Reaktionszone 0,5 bis 7 Gew.-% Wasser einsetzt, auf Temperaturen im Bereich von 220 bis 310°C erhitzt und polymerisiert, bis ein Umsatz von mindestens 85% erreicht ist, und in der zweiten Reaktionszone nach dem Entspannen bei Temperaturen im Bereich von 215 bis 300°C ohne Zuführung von Wärme weiterpolymerisiert.

Des weiteren wurden niedermolekulares Polycaprolactam mit einem Molekulargewicht im Bereich von 3000 bis 14000 g/mol, die Verwendung dieses Polycaprolactams zur Herstellung von stückigem Polycaprolactam und hochmolekularem Polycaprolactam sowie ein Verfahren zur Herstellung von hochmolekularem Polycaprolactam aus diesem niedermolekularen Polycaprolactam gefunden.

Als Lactam kann man beispielsweise Caprolactam, Önanthlactam, Capryllactam und Lauryllactam sowie deren Mischungen, bevorzugt Caprolactam, einsetzen.

Als weitere Monomereinheiten kann man beispielsweise Dicarbonsäuren, wie Alkandicarbonsäuren mit 6 bis 12 Kohlenstoffatomen, insbesondere 6 bis 10 Kohlenstoffatomen, wie Adipinsäure, Pimelinsäure, Korksäure, Azelainsäure oder Sebazinsäure sowie Terephthalsäure und Isophthalsäure, Diamine wie $C_4$-$C_{12}$-Alkyldiamine, insbesondere mit 4 bis 8 Kohlenstoffatomen wie Hexamethylendiamin, Tetramethylendiamin oder Octamethylendiamin, ferner m-Xylylendiamin, Bis-(4-aminophenyl)methan, Bis-(4-aminophenyl)-propan-2,2 oder Bis-(4-aminocyclohexyl)methan, sowie Mischungen von Dicarbonsäuren und Diaminen jeweils für sich in beliebigen Kombinationen, im Verhältnis zueinander jedoch vorteilhaft im äquivalenten Verhältnis wie Hexamethylendiammoniumadipat, Hexamethylendiammoniumterephthalat oder Tetramethylendiammoniumadipat, bevorzugt Hexamethylendiammoniumadipat und Hexamethylendiammoniumterephthalat, in Mengen im Bereich von 0 bis 60, vorzugsweise von 10 bis 50 Gew.-%, bezogen auf die Gesamtmenge an Monomeren, einsetzen. Besondere technische Bedeutung haben Polycaprolactam und Polyamide, die aus Caprolactam, Hexamethylendiamin sowie Adipinsäure, Isophthalsäure und/oder Terephthalsäure aufgebaut sind, erlangt.

In einer bevorzugten Ausführungsform setzt man Caprolactam und Hexamethylendiammoniumadipat ("AH-Salz") ein, wobei man das AH-Salz als waßrige Lösung verwendet. Üblicherweise wählt man das Molverhältnis von Caprolactam zu AH-Salz im Bereich von 99,95:0,05 bis 80:20, bevorzugt von 95:5 bis 85:15.

Als übliche Zusatz- und Füllstoffe kann man Pigmente wie Titandioxid, Siliciumdioxid oder Talk, Kettenregler wie aliphatische und aromatische Carbon- und Dicarbonsäuren wie Propionsäure oder Terephthalsäure, Stabilisatoren wie Kupfer(I)halogenide und Alkalimetallhalogenide, Nukleierungsmittel wie Magnesiumsilikat oder Bornitrid, Katalysatoren wie phosphorige Säure sowie Antioxidantien in Mengen im Bereich von 0 bis 5, bevorzugt von 0,05 bis 1 Gew.-%, bezogen auf die Gesamtmenge an Monomeren, einsetzen. Die Additive setzt man in der Regel vor dem Granulieren und vor, während oder nach, bevorzugt nach der Polymerisation zu.

Das erfindungsgemäße Verfahren führt man in der Regel so aus, daß man ein Gemisch aus Lactam und 0,5 bis 7, bevorzugt von 1 bis 4,5, besonders bevorzugt von 2 bis 3 Gew.-% Wasser, das zweckmaßig auf eine Temperatur im Bereich von 75 bis 90°C vorgeheizt ist, in ein Reaktionsgefäß leitet, wobei man das Reaktionsgemisch auf eine Temperatur im Bereich von 220 bis 310, vorzugsweise von 240 bis 290°C, erhitzt.

Vorteilhaft besitzt das Reaktionsgefäß Einbauten wie geordnete Mischelemente (z.B. sogenannte Sulzerpakkungen) oder ungeordnete Mischelemente wie Füllkörper (z.B. Raschigringe, Kugeln oder Pallringe), damit vorzugsweise eine Mindestverweildauer der Monomeren in der Schmelze (zwecks Erzielung eines hohen Umsatzes) gewährleistet ist, und Zonen, in denen kein oder nur ein minimaler Transport der Schmelze erfolgt ("Totzonen") sowie eine Rückvermischung möglichst vermieden werden.

Den Reaktionsdruck wählt man erfindungsgemäß so, daß das Reaktionsgemisch einphasig flüssig vorliegt. Dies ist vorteilhaft, da die Ausbildung von Gaspolstern im allgemeinen ein Pulsieren der Strömung bewirkt, was eine Rückvermischung und ein ungleichmäßiges Polymerisieren zur Folge haben würde. Der Druck liegt hierbei in der Regel im Bereich von 5 bis 30, vorzugsweise von 8 bis 18 bar (absolut).

Die Verweilzeit, die im wesentlichen von Temperatur, Druck und Wassergehalt des Reaktionsgemisches abhängt, wählt man erfindungsgemäß im Bereich von 2 bis 4 h, bevorzugt von 2 bis 2,5 h. Bei Reaktionszeiten von weniger als 2 h und einem Wassergehalt unter 1 Gew.-% erhält man im allgemeinen nur Umsätze geringer als 86 %. Reaktionszeiten von mehr als 4 h führen im allgemeinen zu schlechten Raum-Zeit-Ausbeuten, was zudem mit größeren und technisch aufwendigeren Reaktoren einhergeht.

Bei Einsatz von Caprolactam erhält man nach dem erfindungsgemäßen Verfahren üblicherweise nach der ersten Reaktionszone ein Polycaprolactam mit einem Molekulargewicht im Bereich von 3000 bis 9000, bevorzugt von 5000 bis 6700 g/mol. Die Endgruppensummenkonzentration liegt hierbei im allgemeinen im Bereich von 220 bis 670, vorzugsweise von 300 bis 400 mmol/kg, die Schmelzviskosität im Bereich von 100 bis 10000, bevorzugt von 200 bis 4000 mPas (bei 270°C).

Der Umsatz (berechnet aus dem Extraktgehalt, wobei

$$\text{Umsatz} = 100 - \text{Extraktgehalt}$$

gilt) beträgt erfindungsgemäß mindestens 85 %, bevorzugt größer als oder gleich 87 %, besonders bevorzugt größer als oder gleich 89 %.

Erfindungsgemäß entspannt man das unter Druck stehende Reaktionsgemisch adiabatisch, d.h. man führt eine Entspannung durch, bei der die zur Verdampfung erforderliche Wärme nicht von außen zugeführt wird, in einer zweiten Reaktionszone, wobei der Druck in der zweiten Reaktionszone in der Regel im Bereich von 0,1 mbar bis 1,1 bar gewählt wird, bevorzugt im Bereich von 500 bis 1050 mbar. Im allgemeinen kühlt sich hierbei das Reaktionsgemisch aus der ersten Reaktionszone auf Temperaturen im Bereich von 215 bis 300°C ab, bevorzugt von 235 bis 265°C.

Des weiteren entfernt man zweckmäßig mit dem Wasserdampf flüchtige Bestandteile wie das eingesetzte Lactam und weitere Monomereinheiten sowie wasserdampfflüchtige Oligomere davon in der zweiten Reaktionszone. In einer weiteren bevorzugten Ausführungsform führt man die flüchtigen Bestandteile kontinuierlich quantitativ in den Prozeß zurück, d.h. vorzugsweise in die erste Reaktionszone.

Die Verweilzeit in der zweiten Reaktionszone wählt man im allgemeinen im Bereich von 2 bis 60 Minuten, bevorzugt von 3 bis 30 Minuten.

Bei Einsatz von Caprolactam erhält man nach dem erfindungsgemäßen Verfahren üblicherweise nach der zweiten Reaktionszone ein Polycaprolactam mit einem Molekulargewicht im Bereich von 3000 bis 14000, bevorzugt von 6000 bis 12000 g/mol. Die Endgruppensummenkonzentration liegt hierbei im allgemeinen im Bereich von 140 bis 670, vorzugsweise von 170 bis 330 mmol/kg, die Schmelzviskosität im Bereich von 100 bis 10000, bevorzugt von 200 bis 4000 mPas (bei 270°C).

In der Regel erhält man nach der zweiten Reaktionszone ein Polycaprolactam, das nach üblichen Methoden stückig gemacht werden kann, beispielsweise indem man das Polymere in Form von SchmelzProfilen austrägt, anschließend durch ein Wasserbad leitet und hierbei abkühlt und dann granuliert.

Das erfindungsgemäß erhaltene Polycaprolactam kann man nach an sich bekannten Methoden extrahieren und anschließend oder gleichzeitig zu hochmolekularem Polycaprolactam umsetzen.

Beispielsweise kann man das erfindungsgemäße Polycaprolactam mit Wasser im Gegenstrom extrahieren (s. DD-A 206999). Die gewünschte Viskositätszahl des Endprodukts, die in der Regel im Bereich von 140 bis 350 ml/g liegt, kann man in an sich bekannter Weise durch Trocknung beziehungsweise bei der Temperung in fester Phase durch Polykondensation einstellen.

Eine weitere Möglichkeit der Weiterverarbeitung ist die Gasphasenextraktion (s. EP-A 284968) mit gleichzeitigem Molekulargewichtsaufbau, bei der mittels überhitztem Wasserdampf gleichzeitig extrahiert und getempert werden kann. Die gewünschte Viskositätszahl des Endprodukts liegt hierbei im allgemeinen im Bereich von 140 bis 350 ml/g.

Die Vorteile des erfindungsgemäßen Verfahrens gegenüber bekannten Verfahren liegen u.a. darin, daß der Extraktgehalt und die Schmelzviskosität des erfindungsgemäß hergestellten Polyamids niedrig sind.

Gleichzeitig wird dadurch, daß bereits das niedermolekulare Polyamid extrahiert wird - und nicht erst das hochmolekulare Polyamid eine deutliche Verkürzung sowohl der Extraktionszeit als auch der gesamten Herstellzeit der Polyamide und somit eine hohe Raum-Zeit-Ausbeute erreicht.

Zudem werden in den beiden Reaktionszonen die Prozeßwarmen optimal technisch genutzt. Beispielhaft genannt (in Bezug auf die DE-A 24 43 566) seien die Nutzung der freiwerdenden Reaktionswärme bei der Aufheizung der ersten Reaktionszone und der Wegfall der üblicherweise erforderlichen Zufuhr von Wärme in der zweiten Reaktionszone. Zusätzlich weisen die erfindungsgemäß erhältlichen Polymere aufgrund ihres relativ geringen Molekulargewichtes und ihrer gleichzeitig hohen Endgruppensummenkonzentration eine hohe Reaktivität auf, die bei der Weiterverarbeitung zur Verfügung steht. Beispiele hierfür sind die reaktive Anbindung des erfindungsgemäßen Polyamids an Füllstoffe wie Glasfasern und andere Additive und die Herstellung von Blockcopolymeren durch Mischen im schmelzflüssigen Zustand mit weiteren Polymeren.


Beispiele


Die Bestimmung der Carboxylendgruppen erfolgte durch acidimetrische Titration (Doppelbestimmung). Hierzu wurden zunächst Blindwert und Faktor bestimmt, dann die Messung mit dem zu untersuchenden Polyamid wiederholt und hieraus der Endgruppengehalt ermittelt.

Zur Bestimmung des Blindwertes wurden 30 ml destillierter Benzylalkohol auf einer Heizplatte unter Zugabe von einigen Glas-Siedekugeln 15 Minuten am Rückfluß gekocht und anschließend heiß nach Zugabe von 6 Tropfen Indikator (50 mg Kresolrot in 50 ml n-Propanol p.A. gelöst) mit der Titrierlösung (80 ml 0,5 m methanolische KOH-Lösung/860 ml n-Propanol mit Hexanol auf 2000 ml aufgefüllt) bis zum Umschlag (gelb-grau) titriert.

Zur Bestimmung des Faktors wurde der Versuch wiederholt, mit dem Unterschied, daß 0,015 g AH-Salz zum Benzylalkohol zugegeben wurden. Der Faktor errechnete sich aus Einwaage AH-Salz : [Verbrauch - Blindwert : 131.2].

Zur Probenbestimmung wurde der Versuch mit 0,5 g des zu untersuchenden Polyamids wiederholt.

Aus [Verbrauch - Blindwert] x Faktor : Einwaage errechnete sich dann der Carboxylendgruppengehalt in mmol/kg.

Die Bestimmung der Aminoendgruppen erfolgte durch acidimetrische Titration (Doppelbestimmung). Hierzu wurden zunächst Blindwert und Faktor bestimmt, dann die Messung mit dem zu untersuchenden Polyamid wiederholt und hieraus der Endgruppengehalt ermittelt.

Zur Bestimmung des Blindwertes wurden 25 ml eines Lösungsmittelgemisches (1000 g Phenol p.A./ 540 g Methanol p.A./ 1 ml 0,1 m methanolische KOH- Lösung) auf einer Magnetrührplatte bei 150 bis 160°C 25 Minuten am Rückfluß gekocht. Nach dem Abkühlen des Gemisches auf Handwärme wurden 2 Tropfen Indikator (0,1 g Benzylorange/ 10 ml Methanol p.A. mit Ethylenglykol auf 100 ml aufgefüllt + 500 mg Methylenblau/ 5 ml Methanol p.A. mit Ethylenglykol auf 50 ml aufgefüllt) zum Lösungsmittelgemisch zugegeben und mit der Titrierlösung (3,44 ml 70 gew.-%ige Perchlorsäure/ 200 ml Methanol p.A. mit Ethylenglykol auf 2000 ml aufgefüllt) bis zum Umschlag (grün-grau) titriert.

Zur Faktorbestimmung wurde der Versuch mit 25 ml Faktorlösung (0,16 g getrocknetes AH-Salz gelöst in 500 ml Lösungsmittelgemisch) anstelle des reinen Lösungsmittelgemisches wiederholt. Der Faktor errechnete sich dann aus Einwaage AH-Salz : [Verbrauch - Blindwert : 131.2].

Zur Probenbestimmung wurde der Versuch mit 0,5 g des zu untersuchenden Polyamids, gelöst in 25 ml des Lösungsmittelgemisches, wiederholt.

Aus [Verbrauch - Blindwert] x Faktor : Einwaage errechnete sich dann der Aminoendgruppengehalt in mmol/kg.

Die Schmelzviskosität wurde in einem Rotationsviskosimeter (Haake RV2) bei 270°C bestimmt.

Molekulargewichte (MG) wurden aus den Endgruppengehalten (in mmol/kg) nach

$$\text{MG (Polymer)} = \left[ 1 : \frac{\text{Endgruppensummenkonzentration}}{2} \right] \times 10^6 \ [\text{g/mol}]$$

errechnet.

Die Lösungsviskosität wird angegeben durch die Viskositätszahl VZ, die die relative Erhöhung der Viskosität eines Lösungsmittels durch 0,1 bis 1,0 g/100 ml gelöstes Polymer, geteilt durch die Konzentration in g/100 ml angibt. Die Viskositätszahlen steigen mit dem Polymerisationsgrad an.

$$VZ = \left( \frac{\eta}{\eta_0} - 1 \right) \cdot \frac{1}{C}$$

$\dfrac{\eta}{\eta_0}$ = Viskositätsverhältnis mit

$\eta$ = Viskosität der Polymerlösung definierter Konzentration

$\eta_0$ = Viskosität des Lösungsmittels

Die Lösungsviskosität wurde bei einer Temperatur von 25°C bestimmt.

Zur Bestimmung des Extraktgehaltes wurden jeweils 10 g des jeweiligen Polyamids in 150 ml Methanol für 16 h am Rückfluß erhitzt.

Danach wurde die noch warme Probe (ca. 50 bis 60°C) über einen Faltenfilter von Feststoffanteilen befreit, wobei der Filtrationsrückstand 3mal mit je 25 ml Methanol nachgewaschen wurde. Das Filtrat wurde in einen mit mehreren Glassiedekugeln versehenen, analytisch gewogenen Stehkolben eingetragen und im Ölbad bei einer Badtemperatur von max. 110°C eingedampft. Der im Kolben verbleibende Extrakt wurde anschließend, nach gründlicher äußerer Reinigung des Kolbens, im Vacuumtrockenschrank 2 h bei 60°C im Wasserstrahlvacuum (20 - 30 Torr) von noch anhaftendem Methanol befreit, dann im Exsikkator abgekühlt und hiernach analytisch ausgewogen.

Beispiel 1

Aus einer beheizten Pumpenvorlage mit einer Temperatur von 80°C wurden unter Stickstoffspülung bei einem Druck von 1050 mbar 20,4 l/h Caprolactamschmelze mit einem Wassergehalt von 2 Gew.-% mittels Pumpe einem beheizten Wärmetauscher mit einer Austauschfläche von 6 m$^2$ und einer Eingangstemperatur von 270°C zugeführt und innerhalb von 2 Minuten auf eine Temperatur von 260°C aufgeheizt. Der Druck an der Druckseite der Pumpe betrug 15 bar; der Zulauf war einphasig flüssig.

Die Zulauf lösung wurde kontinuierlich durch ein zylindrisches Rohr mit einer Länge von 5000 mm und einem Innendurchmesser von 130 mm, das mit 5 mm Raschig-Ringen mit Steg gefüllt war, gepumpt, wobei die mittlere Verweilzeit 2,5 h betrug.

Das zylindrische Rohr wurde mit einem Wärmeträgeröl auf 270°C erhitzt. Die Produkttemperatur am Rohrende betrug 270°C. Der Druck, bei der das Reaktionsgemisch noch einphasig flüssig war, betrug 10 bar. Das Produkt, welches am Ende des zylindrischen Rohres unter Druck entnommen wurde, besaß die folgenden analytischen Kenndaten:

Viskositätszahl (gemessen als 0,55 gew.-%ige Lösung in 96 gew.-%iger Schwefelsäure) = 57 ml/g; Säureendgruppen = 157 mmol/kg; Aminoendgruppen = 155 mmol/kg; Extrakt = 10,5 %; Schmelzviskosität (einphasig flüssig unter Druck bei 270°C im Rotationsviskosimeter) = 280 mPas.

Über ein Regelventil wurde das Reaktionsgemisch kontinuierlich in ein schutzbeheiztes Abscheidegefäß auf Atmosphärendruck entspannt, wobei das Reaktionsgemisch zweiphasig wurde und die Temperatur durch adiabatische Wasserverdampfung um 8°C auf 262°C abkühlte.

Im Sumpf des Abscheidegefäßes wurde ein schmelzeflüssiges Präpolymeres mit den folgenden analytischen Kenndaten erhalten:

Viskositätszahl (gemessen als 0,55 gew.-%ige Lösung in 96 gew.-%iger Schwefelsäure) = 81 ml/g; Säureendgruppen = 99 mmol/kg; Aminoendgruppen = 102 mmol/kg; Extrakt = 9,7 %; Schmelzviskosität (270°C) = 350 mPas.

Die gasförmigen Brüden bestanden aus 70 Gew.-% Wasser und aus 30 Gew.-% wasserdampfflüchtigen Anteilen (die Bestimmung der Zusammensetzung erfolgte durch Bestimmung des Brechungsindexes des Lactamgehaltes im Brüdenkondensat bei 25°C, wobei eine Eichkurve mit verschiedenen Caprolactam/Wasser-Verhältnissen zugrundegelegt wurde) und wurden am Kopf des Abscheidegefäßes abgeführt, dann in einem Kondensator verflüssigt und anschließend zur Ansatzzubereitung verwendet.

Nach einer Verweilzeit von 5 Minuten wurde das Präpolymere kontinuierlich mit einer Schmelzepumpe aus dem Abscheidegefäß über eine Düse in ein Wasserbad in Form von Schmelzprofilen ausgetragen, im Wasserbad verfestigt und granuliert. Das so hergestellte Präpolymere wurde anschließend analog zum Stand der Technik (s. DD-A 206 999) mit Wasser im Gegenstrom extrahiert und solange getempert, bis ein Molekulargewicht von 28500 g/mol erreicht war.

Beispiel 2

Aus einer beheizten Pumpenvorlage mit einer Temperatur von 80°C wurden unter Stickstoffspülung bei einem Druck von 1050 mbar 20,4 l/h Caprolactamschmelze mit einem Wassergehalt von 2 Gew.-% mittels Pumpe einem beheizten Wärmetauscher mit einer Austauschfläche von 6 m$^2$ und einer Eingangstemperatur von 270°C zugeführt und innerhalb von 2 Minuten auf eine Temperatur von 260°C aufgeheizt. Der Druck an der Druckseite der Pumpe betrug 15 bar; der Zulauf war einphasig flüssig.

Die Zulauflösung wurde kontinuierlich durch ein zylindrisches Rohr mit einer Länge von 5000 mm und einem Innendurchmesser von 130 mm, das mit 5 mm Raschig-Ringen mit Steg gefüllt war, gepumpt, wobei die mittlere Verweilzeit 2,5 h betrug.

Das zylindrische Rohr wurde mit einem Wärmeträgeröl auf 270°C erhitzt. Die Produkttemperatur am Rohrende betrug 270°C. Der Druck, bei der das Reaktionsgemisch noch einphasig flüssig war, betrug 10 bar. Das Produkt, welches am Ende des zylindrischen Rohres unter Druck entnommen wurde, besaß die folgenden analytischen Kenndaten:

Viskositätszahl (gemessen als 0,55 gew.-%ige Lösung in 96 gew.-%iger Schwefelsäure) = 53 ml/g; Säureendgruppen = 166 mmol/kg; Aminoendgruppen = 166 mmol/kg; Extrakt = 10,3 %; Schmelzviskosität (einphasig flüssig unter Druck bei 270°C) = 260 mPas.

Über ein Regelventil wurde das Reaktionsgemisch kontinuierlich in ein schutzbeheiztes Abscheidegefäß auf Atmosphärendruck entspannt, wobei das Reaktionsgemisch zweiphasig wurde. An dieser Stelle wurde über ein Zuführungsrohr überhitzter Wasserdampf isotherm (270°C) in die Schmelze geleitet, wobei Caprolactam und weitere wasserdampfflüchtige Anteile wie ein Teil der Oligomeren des Caprolactams mit dem Dampf ausgetragen wurden.

Im Sumpf des Abscheidegefäßes wurde ein schmelzeflüssiges Präpolymeres mit den folgenden analytischen Kenndaten erhalten:

Viskositätszahl (gemessen als 0,55 gew.-%ige Lösung in 96 gew.-%iger Schwefelsäure) = 91 ml/g; Aminoendgruppen = 95 mmol/kg; Extrakt = 4,8 %.

Die gasförmigen Brüden bestanden aus 80 Gew.-% Wasser und aus 20 Gew.-% wasserdampfflüchtigen Anteilen und wurden am Kopf des Abscheidegefäßes abgeführt und in einer Kolonne aufgetrennt. Der Kolonnensumpf wurde zur Ansatzzubereitung verwendet und das Kopfprodukt nach Aufheizen aus 270°C in den zweiten Reaktorteil zurückgeführt.

Das Präpolymere wurde kontinuierlich mit einer Schmelzepumpe aus dem Abscheidegefäß über eine Düse in ein Wasserbad in Form von Schmelzprofilen ausgetragen, im Wasserbad verfestigt und granuliert. Das so hergestellte Präpolymere wurde anschließend analog zum Stand der Technik (s. DD-A 206 999) mit Wasser im Gegenstrom extrahiert und solange getempert, bis ein Molekulargewicht von 33500 g/mol (VZ = 250 ml/g (gemessen als 0,55 gew.-%ige Lösung in 96 gew.-%iger Schwefelsäure), Endgruppensummenkonzentration = 60 mmol/kg) erreicht war.

Beispiel 3

Aus einer beheizten Pumpenvorlage mit einer Temperatur von 80°C wurden unter Stickstoffspülung bei einem Druck von 1050 mbar 20,4 l/h Caprolactamschmelze mit einem Wassergehalt von 2 Gew.-% mittels Pumpe einem beheizten Wärmetauscher mit einer Austauschfläche von 6 m$^2$ und einer Eingangstemperatur von 270°C zugeführt und innerhalb von 2 Minuten auf eine Temperatur von 260°C aufgeheizt. Der Druck an der Druckseite der Pumpe betrug 15 bar; der Zulauf war einphasig flüssig.

Die Zulauf lösung wurde kontinuierlich in ein zylindrisches Rohr mit einer Länge von 5000 mm und einem Innendurchmesser von 130 mm, das mit 5 mm Raschig-Ringen mit Steg gefüllt war, gepumpt, wobei die mittlere Verweilzeit 2,5 h betrug.

Das zylindrische Rohr wurde mit einem Wärmeträgeröl auf 270°C erhitzt. Die Produkttemperatur am Rohrende betrug 270°C. Der Druck, bei der das Reaktionsgemisch noch einphasig flüssig war, betrug 10 bar. Das Produkt, welches am Ende des zylindrischen Rohres unter Druck entnommen wurde, besaß die folgenden analytischen Kenndaten:

Viskositätszahl (gemessen als 0,55 gew.-%ige Lösung in 96 gew.-%iger Schwefelsäure) = 55 ml/g; Säureendgruppen = 162 mmol/kg; Aminoendgruppen = 158 mmol/kg; Extrakt = 10,4 %; Schmelzviskosität (einphasig flüssig unter Druck bei 270°C) = 280 mPas.

Über ein Regelventil wurde das Reaktionsgemisch kontinuierlich in ein schutzbeheiztes Abscheidegefäß auf einen Druck von 90 mbar entspannt, wobei das Reaktionsgemisch zweiphasig wurde und die Temperatur durch adiabatische Wasserverdampfung um 12°C auf 258°C abkühlte.

Im Sumpf des Abscheidegefäßes wurde ein schmelzeflüssiges Präpolymeres mit den folgenden analytischen Kenndaten erhalten:

Viskositätszahl (gemessen als 0,55 gew.-%ige Lösung in 96 gew.-%iger Schwefelsäure) = 75 ml/g; Saureendgruppen = 117 mmol/kg; Aminoendgruppen = 121 mmol/kg; Extrakt = 2,5 %.

Die gasförmigen Brüden bestanden aus 42 Gew.-% Wasser und aus 58 Gew.-% wasserdampfflüchtigen Anteilen und wurden am Kopf des Abscheidegefäßes abgeführt, dann in einem Kondensator verflüssigt und anschließend zur Ansatzzubereitung verwendet.

Das Präpolymere wurde kontinuierlich mit einer Schmelzepumpe aus dem Abscheidegefäß über eine Düse in ein Wasserbad in Form von Schmelzprofilen ausgetragen, im Wasserbad verfestigt und granuliert. Das so hergestellte Präpolymere wurde anschließend analog zum Stand der Technik (s. DD-A 206 999) mit Wasser im Gegenstrom extrahiert und anschließend solange getempert, bis eine Viskositätszahl von 192 ml/g erreicht war.

Beispiel 4 - Extraktion mit Methanol

Jeweils 10 g niedermolekulares Polycaprolactam (A) (hergestellt analog zu Beispiel 1, mit dem Unterschied, daß 0,15 Gew.-% Propionsäure, bezogen auf das Gesamtgewicht der Monomeren, dem Monomerengemisch zugesetzt wurden) und jeweils 10 g hochmolekulares Polycaprolactam (B) (erhalten durch Reaktion von Caprolactam mit 0,5 Gew.-% Wasser, bei einer Verweilzeit von 13 h im VK-Rohr, wobei die Kopf temperatur 259°C und die Rohrtemperatur 260 bis 280°C betrug) wurden in 150 ml Methanol für jeweils eine bestimmte Zeit (siehe Tabelle 2) am Rückfluß erhitzt.

Danach wurde die noch warme Probe (ca. 50 bis 60°C) über einen Faltenfilter von Feststoffanteilen befreit, wobei der Filtrationsrückstand 3mal mit je 25 ml Methanol nachgewaschen wurde. Das Filtrat wurde in einen mit mehreren Glassiedekugeln versehenen, analytisch gewogenen Stehkolben eingetragen und im Ölbad bei einer Badtemperatur von max. 110°C eingedampft. Der im Kolben verbleibende Extrakt wurde anschließend, nach gründlicher äußerer Reinigung des Kolbens, im Vacuumtrockenschrank 2 h bei 60°C im Wasserstrahlvacuum (20 - 30 Torr) von noch anhaftendem Methanol befreit, dann im Exsikkator abgekühlt und hiernach analytisch ausgewogen.

Tabelle 1:

| Analytische Kenndaten der Extraktionsproben | | |
|---|---|---|
| | Probe A | Probe B |
| Viskositätszahl / g/ml | 67 | 158 |
| Molmasse / g/mol | 8100 | 22000 |

Tabelle 2:

| Vergleich der Proben bei der Extraktion mit Methanol | | |
|---|---|---|
| Extraktionszeit / h | Probe A | Probe B |
| 0 | 0 | 0 |
| 0,5 | 9,4 | 8,4 |

Tabelle 2:   (fortgesetzt)

| Vergleich der Proben bei der Extraktion mit Methanol | | |
|---|---|---|
| Extraktionszeit / h | Probe A | Probe B |
| 1 | 9,6 | 8,2 |
| 2 | 10,0 | 8,5 |
| 3 | 10,0 | 9,5 |
| 5 | 10,1 | 9,7 |
| 6 | 10,3 | 9,7 |
| 7 | 10,2 | 9,8 |
| 9 | 10,4 | 10,0 |
| 12 | 10,3 | 9,9 |
| 16 | 10,3 | 10,0 |
| 20 | 10,3 | 10,3 |

Die Extraktionszeit bis zum Erreichen eines konstanten Endwertes der niedermolekularen Probe A betrug 6 bis 7 h, während die der Probe B 20 h betrug.

Beispiel 5 - Extraktion mit Wasser

Der Versuch von Beispiel 4 wurde wiederholt mit dem Unterschied, daß anstelle von Methanol Wasser als Extraktionsmittel verwendet wurde.

Tabelle 3:

| Analytische Kenndaten der Extraktionsproben | | |
|---|---|---|
|  | Probe A | Probe B |
| Viskositätszahl / g/ml | 67 | 158 |
| Molmasse / g/mol | 8100 | 22000 |

Tabelle 4:

| Vergleich der Proben bei der Extraktion mit Wasser | | |
|---|---|---|
| Extraktionszeit / h | Probe A | Probe B |
| 0 | 0 | 0 |
| 0,5 | 4,1 | 3,0 |
| 2 | 7,3 | - |
| 3 | 8,0 | 6,3 |
| 5 | 8,9 | 8,2 |
| 6 | 9,6 | 8,6 |
| 7 | 9,7 | 8,6 |
| 9 | - | 8,6 |
| 12 | - | 9,0 |
| 16 | 9,7 | 9,3 |
| 20 | - | 9,7 |

Die Extraktionszeit bis zum Erreichen eines konstanten Endwertes der niedermolekularen Probe A betrug 6 bis 7 h, während die der Probe B 20 h betrug.

**Patentansprüche**

1. Verfahren zum kontinuierlichen Herstellen von Polyamiden aus einem Gemisch aus mindestens einem Lactam und Wasser sowie gewünschtenfalls weiterer Monomereinheiten und/oder üblichen Zusatz- und Füllstoffen unter polyamidbildenden Bedingungen, wobei man das Gemisch der Ausgangsstoffe in einer ersten Reaktionszone in flüssiger Phase erhitzt bis ein Umsatz von mindestens 70% erreicht ist, und in einer weiteren Reaktionszone adiabatisch entspannt und weiterpolymerisiert, dadurch gekennzeichnet, daß man in der ersten Reaktionszone 0,5 bis 7 Gew.-% Wasser einsetzt, auf Temperaturen im Bereich von 220 bis 310°C erhitzt und polymerisiert bis ein Umsatz von mindestens 85% erreicht ist, und in der zweiten Reaktionszone nach dem Entspannen bei Temperaturen im Bereich von 215 bis 300°C ohne Zuführung von Wärme weiterpolymerisiert.

2. Verfahren gemäß Anspruch 1, dadurch gekennzeichnet, daß man in der ersten Reaktionszone eine Verweilzeit von 2 bis 4 h einhält.

3. Verfahren gemäß den Ansprüchen 1 oder 2, dadurch gekennzeichnet, daß man die Schmelze nach der zweiten Reaktionszone in die feste Phase überführt und die flüchtigen Bestandteile in die erste Reaktionszone zurückführt.

4. Verfahren gemäß den Ansprüchen 1 bis 3, dadurch gekennzeichnet, daß man das unter Druck stehende Reaktionsgemisch aus der ersten Reaktionszone in der zweiten Reaktionszone auf einen Druck im Bereich von 0,1 mbar bis 1,1 bar entspannt.

5. Verfahren gemäß den Ansprüchen 1 bis 4, dadurch gekennzeichnet, daß die Temperatur in der zweiten Reaktionszone 5 bis 20°C niedriger ist als in der ersten Reaktionszone.

6. Verfahren zur Herstellung von hochmolekularem Polycaprolactam durch Polykondensation von niedermolekularem Polycaprolactam, dadurch gekennzeichnet, daß man Polycaprolactam hergestellt nach einem der Verfahren gemäß den Ansprüchen 1 bis 4 in der Gasphase extrahiert und gleichzeitig in fester Phase nachkondensiert oder in an sich bekannter Weise extrahiert und in fester Phase nachkondensiert.

**Claims**

1. A process for the continuous production of polyamides from a mixture of at least one lactam and water and, if required, other monomer units and/or conventional additives and fillers under polyamide-forming conditions, where the mixture of the starting materials is heated in liquid phase in a first reaction zone until a conversion of at least 70% is reached, and undergoes adiabatic decompression and further polymerization in another reaction zone, wherein, in the first reaction zone, 0.5-7% by weight of water are employed, the temperature is increased to the range from 220 to 310°C, and polymerization is carried out until a conversion of at least 85% is reached and, in the second reaction zone, after the decompression further polymerization is carried out in the range from 215 to 300°C without heat input.

2. A process as claimed in claim 1, wherein the residence time in the first reacton zone is maintained at 2-4 h.

3. A process as claimed in claim 1 or 2, wherein the melt after the second reaction zone is converted to the solid phase, and the volatiles are returned to the first reaction zone.

4. A process as claimed in claims 1 to 3, wherein the reaction mixture under pressure from the first reaction zone is decompressed in the second reaction zone to a pressure in the range from 0.1 mbar to 1.1 bar.

5. A process as claimed in claims 1 to 4, wherein the temperature in the second reaction zone is 5-20°C lower than in the first reaction zone.

6. A process for the production of high molecular weight polycaprolactam by polycondensation of low molecular weight polycaprolactam, which comprises polycaprolactam produced by one of the processes as claimed in claims 1 to 4 being extracted in the gas phase and simultaneously subsequently condensed in solid phase or extracted in a conventional manner and subsequently condensed in solid phase.

**Revendications**

1. Procédé de préparation continue de polyamides constitués d'un mélange d'au moins un lactame et d'eau ainsi qu'éventuellement d'autres unités monomériques et/ou des charges et des additifs habituels, dans des conditions poyamidogènes, où on chauffe le mélange des matières de départ dans une première zone de réaction, en phase liquide, jusqu'à ce que l'on atteigne une conversion d'au moins 70% et, dans une autre zone de réaction, on procède à une détente adiabatique et on poursuit la polymérisation, caractérisé en ce que, dans la première zone de réaction, on introduit de 0,5 à 7% en poids d'eau, on chauffe à des températures qui varient de 220 à 310°C et on polymérise jusqu'à ce qu'une conversion d'au moins 85% soit atteinte et, dans la seconde zone de réaction, on poursuit la polymérisation après la détente, à des températures qui varient de 215 à 300°C, sans apport de chaleur.

2. Procédé suivant la revendication 1, caractérisé en ce que la durée de séjour dans la première zone de réaction est maintenue entre 2 et 4 heures.

3. Procédé suivant la revendication 1 ou 2, caractérisé en ce que l'on transforme la masse fondue après la seconde zone de réaction en phase solide et on renvoie les constituants volatils dans la première zone de réaction.

4. Procédé suivant l'une quelconque des revendications 1 à 3, caractérisé en ce que l'on détend le mélange de réaction sous pression provenant de la première zone de réaction dans la seconde zone de réaction, jusqu'à une pression qui varie de 0,1 mbar à 1,1 bar.

5. Procédé suivant les revendications 1 à 4, caractérisé en ce que la température dans la seconde zone de réaction est inférieure de 5 à 20°C à celle qui règne dans la première zone de réaction.

6. Procédé de préparation de polycaprolactame de poids moléculaire élevé par la polymérisation de polycaprolactame de faible poids moléculaire, caractérisé en ce que l'on extrait le polycaprolactame préparé suivant la procédé suivant les revendications 1 à 4 en phase gazeuse et on le postcondense simultanément en phase solide, ou bien on l'extrait d'une manière en soi connue et on le postcondense en phase solide.